# EUROPEAN PATENT SPECIFICATION

(11) **EP 3 422 129 B1**
(45) Date of publication and mention of the grant of the patent: **19.06.2019**
(21) Application number: 17178637.9
(22) Date of filing: 29.06.2017
(51) Int. Cl.: G05D 1/00, B64C 39/02

(54) **CONTROLLER FOR A REMOTELY PILOTED AIRCRAFT SYSTEM**
STEUERGERÄT FÜR EIN FERNGESTEUERTES FLUGZEUGSYSTEM
ORGANE DE COMMANDE DE SYSTÈME DE PILOTAGE D'AÉRONEF TÉLÉCOMMANDÉ

(43) Date of publication of application: 02.01.2019
(73) Proprietor: Deutsche Telekom AG, 53113 Bonn (DE)
(72) Inventor: FRISCH, Andreas, 53757 Sankt Augustin (DE)
(74) Representative: Patentship Patentanwaltsgesellschaft mbH

(56) References cited:
- EP-A1- 3 086 195
- WO-A1-2016/168722
- US-A1- 2010 084 513
- US-A1- 2012 221 179
- US-A1- 2017 168 481

## Description

### TECHNICAL FIELD

The present disclosure relates to a controller for a Remotely Piloted Aircraft System (RPAS) such as an Unmanned Aerial Vehicle (UAV) or a drone, in particular a controller providing a relative direction indicator (RDI) at a graphical interface. The disclosure further relates to a corresponding method for controlling an RPAS with providing an RDI.

### BACKGROUND

Based on current regulation Unmanned Aerial Vehicles (UAVs, "drones") can be flown in line of sight to the operator/pilot. However, depending on size of the UAV the UAV becomes soon very small in the perspective of the pilot. Most drones are only recognizable as a small dot in the sky in a distance of 100 m and beyond. Even if front and tail are marked with green/red lights it is more or less impossible to see in which direction the UAV is pointing simply it is too small from the viewpoint of the pilot.

US patent application US2017168481 A1 presents a configuration for displaying a user interface on a remote controller to assist a user in correctly orienting the device for improved communication with an aerial vehicle.

European patent publication EP3086195 A1 presents a remote controller for a drone including visual indications of a misalignment of the drone with respect to the console heading.

International patent publication WO2016168722 A1 presents methods and systems for new paradigms for user interaction with an unmanned aerial vehicle using a portable multifunction device such as smart phone.

### SUMMARY

It is the object of the invention to provide a concept for improving controllability of a remotely piloted aircraft system such as an UAV or a drone, in particular in situations as described above.

This object is achieved by the features of the independent claims. Further implementation forms are apparent from the dependent claims, the description and the figures.

A main idea of the invention is to include and combine the following three aspects as further described below: Relative Direction Indicator (RDI), Pilot Compass Orientation and RDI-Align Function.

A "Relative Direction Indicator" (RDI) as presented in this disclosure is related to the following situation: Most UAVs combine the controller with a Smartphone or a similar device with a screen, in particular if the UAV has a camera and transfers the pictures and/or the video stream online to the pilot. Usually the pilot gets some indication on the screen like speed, altitude etc. based on the UAV related App to support the pilot's flight operation. An RDI may be a very helpful tool on top of this information. The Relative Direction Indicator is a graphical display on the screen to show the pilot in which direction the UAV is currently pointing in relation to the viewpoint of the pilot (other than a pure compass). Most drones are equipped with a "return to base" function, mainly based on GPS coordinates. This data can be used for such RDI as well. Since UAV knows its current position and the position of the controller it is able to indicate the current direction in relation to the controller.

A "Pilot compass orientation" as presented in this disclosure is related to the following situation: To consider any movement of the pilot and to still indicate the heading of the UAV correctly relative to the pilot, the controller is able to indicate its position (e.g. by GPS coordinates) and the heading of the controller itself (e.g. by a compass). This is important to capture the following situation: The UAV stands still in the air in some distance from the pilot pointing still in the direction from the movement before. However, for any reason the pilot changes its position. If the pilot does not move in straight line towards the UAV the relative position of the drone changes. The RDI would indicate this by comparing the new position of the pilot to the drone to recognize the changed angle of the line of sight relation from the pilot to his UAV and to show this new information correctly on the display. The same situation would occur if the pilot just turns by 90°because the pilot wants to look in this new direction and in parallel wants to steer the UAV in this new direction. In this case the Pilot would have to move the UAV by 90° to the direction he turns which could be difficult without indication on the display and with the drone in distance which does not allow to see the precise heading of the drone.

An "RDI Align Function" as presented in this disclosure is related to the following situation: To keep it simple for the pilot even in larger distance without really seeing the heading of the UAV the RDI-Align Function will enable by a simple push to make the UAV pointing in the direction the pilot wants. This could be a simple 0° position, which means exactly tail of the UAV to the pilot / pushing the button/control-stick forward means the UAV flies away from the pilot; or if required precisely let the UAV precisely head to a certain direction from the pilot's perspective (such as 90° or 225° if this is appropriate for the next movement).

In order to describe the invention in detail, the following terms, abbreviations and notations will be used:
- RPAS:: remotely piloted aircraft system or subject
- UAV:: unmanned aerial vehicle or drone
- RDI:: Relative Direction Indicator
- GNSS:: Global Navigation Satellite System
- GPS:: Global Positioning System
- 5G:: fifth generation mobile network
- LTE:: Long Term Evolution
- BS:: Base Station, eNodeB
- RF:: radio frequency

In the following description, the term UAV refers to a remotely piloted aircraft subject or system.

In the following, unmanned aerial vehicles (UAVs) and drones are described. A UAV, commonly known as a drone, unmanned aircraft system (UAS), remotely piloted aircraft system (RPAS), remotely piloted aircraft subject or by several other names, is an aircraft without a human pilot aboard. A UAV is defined as a powered, aerial vehicle that does not carry a human operator, uses aerodynamic forces to provide vehicle lift, can fly autonomously or be piloted remotely, can be expendable or recoverable, and can carry a payload. The flight of UAVs may operate with various degrees of vehicular automation: either under remote control by a human operator, or fully or intermittently autonomously, by onboard computers.

UAVs as described in the following may be equipped with global navigation satellite system (GNSS) receivers (e.g. GPS, GLONASS, Galileo) to determine their location to high precision (within a few meters) using time signal transmitted along a line-of-sight propagation by radio from satellites to provide autonomous geo-spatial positioning. The GNSS receivers can be used for providing position, navigation or for tracking the position.

Additionally the received signals allow the electronic receiver to calculate the current local time to high precision, which allows time synchronisation.

According to a first aspect, the invention relates to a controller for a remotely piloted aircraft system (RPAS) according to claim 1 and to a method according to claim 13.

This provides the advantage that the pilot can reset the RPAS to a position aligned with his own viewpoint and location which may be aligned with the orientation and location of the controller when the pilot wears the controller.

In an implementation form of the controller, the graphical interface comprises a radio interface with a Smartphone for transferring the RDI onto a display of the Smartphone.

This provides the advantage that the RDI can be easily transferred by radio via the graphical interface from the controller to the Smartphone where an application program (App) can be used to show the RDI in a graphical representation.

In an implementation form of the controller, the specific direction is based on a predefined direction.

This provides the advantage that the pilot can easily reset the position of the RPAS based on one or more predefined directions, e.g. based on a scale on the controller or Smartphone.

In an implementation form of the controller, the specific direction is based on an orientation of the controller, determined by the processor based on the orientation data provided by the compass and the first position data received by the GNSS receiver.

This provides the advantage that the pilot can reset the RPAS to a position aligned with his own viewpoint and location which may be aligned with the orientation and location of the controller when the pilot wears the controller.

In an implementation form of the controller, the specific direction is in line with a viewpoint of the pilot wearing the controller.

This provides the advantage that the pilot can flexibly reset the RPAS to a position according to his own viewpoint.

In an implementation form the controller comprises: a push button or control stick configured to initiate the transmission of the alignment command to the RPAS upon activation by the pilot.

This provides the advantage that the pilot can easily steer the RPAS to a desired orientation simply by actuating a push button or control stick on his controller.

In an implementation form of the controller, the compass comprises an electronic compass integrated with the processor on a chip.

This provides the advantage that the functionality of the compass can be implemented in a compact manner, e.g. on a printed circuit board (PCB) or on a chip.

In an implementation form of the controller, the processor is configured to determine a movement vector of the RPAS based on tracking the second position data and configured to determine the relative direction of the RPAS towards the controller based on the movement vector of the RPAS.

This provides the advantage that the pilot can accurately determine the movement vector of the RPAS, in particular in situtations where the heading of the RPAS is not clearly visible to the pilot (or not within line of sight).

In an implementation form of the controller, the processor is configured to determine a viewing vector of the pilot wearing the controller based on the orientation data and the first position data and configured to determine the relative direction of the RPAS towards the controller based on the viewing vector of the pilot.

This provides the advantage that the pilot can control the RPAS based on his subjective viewing point.

In an implementation form of the controller, the processor is configured to determine the relative direction of the RPAS towards the controller based on a subtraction of the viewing vector of the pilot from the movement vector of the RPAS.

This provides the advantage that the processor can easily determine the relative direction of the RPAS towards the controller by a simple vector subtraction. This is computationally efficient.

According to a second aspect, the invention relates to a control system for a remotely piloted aircraft system (RPAS), the control system comprising: a controller according to the first aspect; and a Smartphone coupled with the graphical interface of the controller via a radio interface, the Smartphone comprising: a display; and a processor configured to run an application program which is configured to fetch the RDI from the graphical interface and to display the RDI on the display.

Such a control system improves controllability of the remotely piloted aircraft system since the RDI can indicate the pilot in all flight situations the relative direction of the RPAS towards the controller and hence towards the pilot wearing the controller.

In an implementation form of the control system, the application program is configured to fetch a command of the pilot via the display to turn the UAV in a specific direction and to transmit the command via the controller to the RPAS.

This provides the advantage that the pilot can easily align the RPAS with the specific direction, e.g. a 0° direction from the pilot's perspective, by making an input at the Smartphone display, preferably by turning the RDI symbol on the Smartphone display into the desired direction.

### BRIEF DESCRIPTION OF THE DRAWINGS

Further embodiments of the invention will be described with respect to the following figures, in which:
Fig. 1 shows a schematic diagram illustrating a basic setup of a controller 100 for UAVs.
Fig. 2 shows a schematic diagram illustrating the scenario 200 of UAV movement depending on heading of the UAV in relation to the pilot.
Fig. 3 shows a schematic diagram illustrating an example 300 for an RDI display on graphical interface indicating current heading of the UAV.
Fig. 4 shows a schematic diagram illustrating the scenario 400 of change in RDI display based on new position of pilot towards UAV.
Fig. 5 shows a schematic diagram illustrating the scenario 500 of an example change in RDI display if pilot turns by 90° on his current position.
Fig. 6 shows a schematic diagram illustrating the scenario 600 with RDI-Align-function in an example for a command to the UAV to turn to 0° in relation to the pilot.
Fig. 7 shows a block diagram illustrating a controller 700 for a RPAS according to the disclosure.
Fig. 8 shows a schematic diagram illustrating a method 800 for controlling an RPAS according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following controllers for UAVs and RPAS are described. The controller as presented in the following is a handheld device that is used by the drone pilot to control the drone. Controllers are also called transmitters.

In the following compasses are described. A compass is an instrument used for navigation and orientation that shows direction relative to the geographic cardinal directions (or points). An electronic compass can be a magnetometer, i.e. an instrument that measures magnetism, either magnetization of magnetic material, or the direction, strength, or the relative change of a magnetic field at a particular location. Magnetometers have been miniaturized to the extent that they can be incorporated in integrated circuits at very low cost and are finding increasing use as compasses in consumer devices such as mobile phones and tablet computers.

Controllers as described in the following may control UAVs or RPASs by using various communication techniques, in particular utilizing radio control based on mobile communication standards such as LTE, in particular LTE-A and/or OFDM and successor standards such as 5G or based on IEEE 802.11 networks such as WiFi or based on other communication standards such as Bluetooth or Zigbee. The components and network nodes of such systems may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

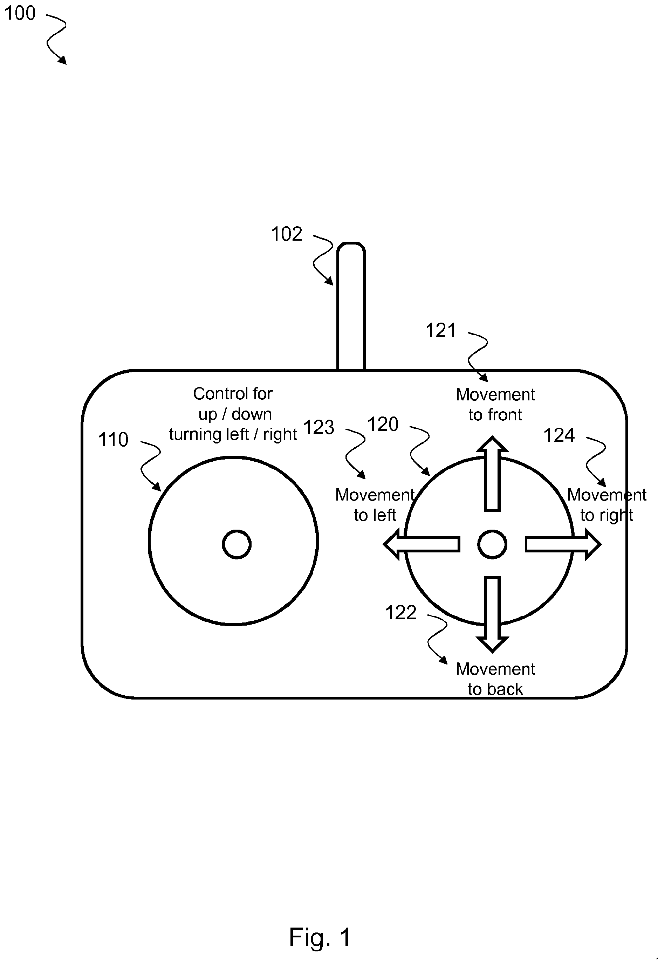

Fig. 1 shows a schematic diagram illustrating a basic setup of a controller 100 for UAVs. The controller 100 is a device that can be weared by a pilot of an RPAS or UAV. The controller 100 includes a first operating element 110 for controlling up/down and turning left/right and a second operating element 120 for controlling movement to front 121, back 122, left 123 and right 124. The controller further includes an antenna 102 for transmitting control commands to the RPAS.

For most amateur pilots, but as well for professional pilots it is easier to fly with an ordinary controller in direction of the personal viewpoint, which means:
- Pushing the button/controller-stick 120 to front 121 / away from the pilot => UAV moves to the front away from the pilot;
- Pulling the button/controller-stick 120 to back 122 / to the pilot => UAV moves back in the direction towards the pilot;
- Pushing the button/ controller-stick 120 to the right 124 UAV moves to the right in line with the pilots perspective;
- Pushing the button/ controller-stick 120 to the left 123 => UAV moves to the left in line with the pilots perspective.

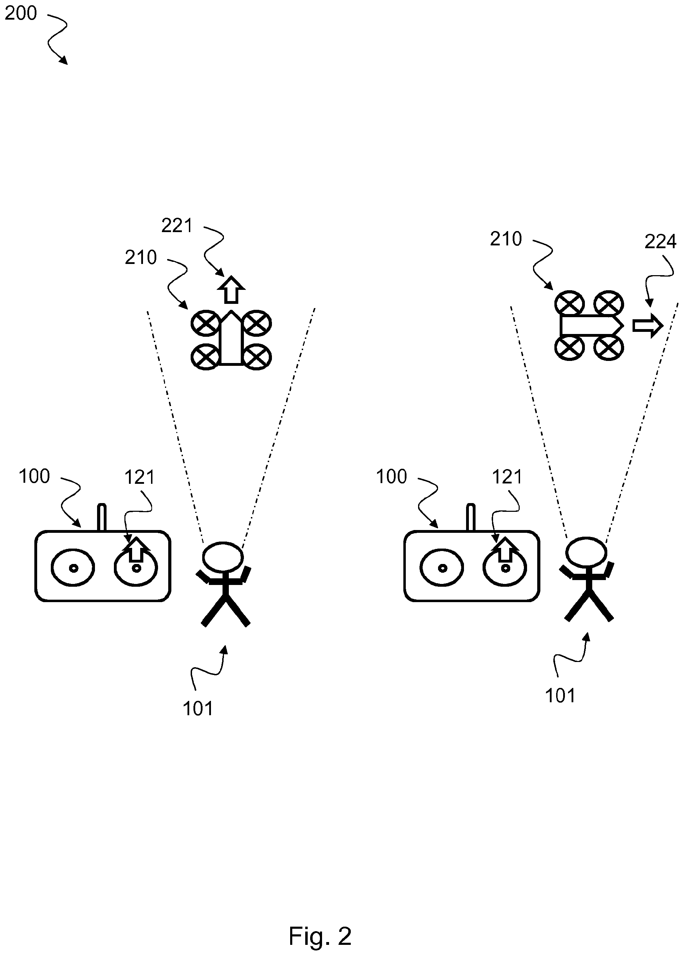

Fig. 2 shows a schematic diagram illustrating the scenario 200 of UAV movement depending on heading of the UAV in relation to the pilot.

On the left side of Fig. 2, the UAV 210 is flying in forward direction 221 when the pilot 101 pushes the button/controller-stick 120 on his controller 100 to forward 121. On the right side of Fig. 2, the UAV 210 is flying to the right direction 224 from the the pilot's viewpoint based on current heading of the UAV, although the pilot 101 pushes the button/controller-stick 120 on his controller 100 to forward 121, i.e. to the same direction as before (on the left side of Fig. 2). That means, depending on the orientation of the UAV actuation of the controller 100 provides different effects.

When the UAV 210 is about 100 m away and points - in relation to the viewpoint of the pilot - not to 0° (as shown on the left side of Fig. 2) but to 90° (as shown on the right side of Fig. 2), moving the button/controller stick 120 to front 121 would mean a movement to the right 224 from the pilots 101 perspective, simply since the pilot 101 can not really see the exact current heading of the UAV 210 and chose the wrong steering command for this reason. If the UAV 210 already is close to an obstacle this may result in a crash.

It is harder- although manageable by a trained pilot - to calculate in mind the following movement when the UAV 210 heads to another direction:
Imagine the UAV points with its front to the pilot: Pushing the button to front 121 => UAV flies to the pilot, but pushing to left would mean that the UAV turns right from the perspective of the pilot.

Either the pilot is skilled to handle this situation or more simple maneuvers should be flown by the pilot to keep in control of the UAV 210. Since in particular Multicopter-UAVs are able to move in all directions and front / back can be flown more or less without any obstacles it is more convenient to have a 1:1 relation between pointing the button/controller stick 120 to the direction the UAV 210 shall go and the according movement of the UAV 210 exactly in this direction.

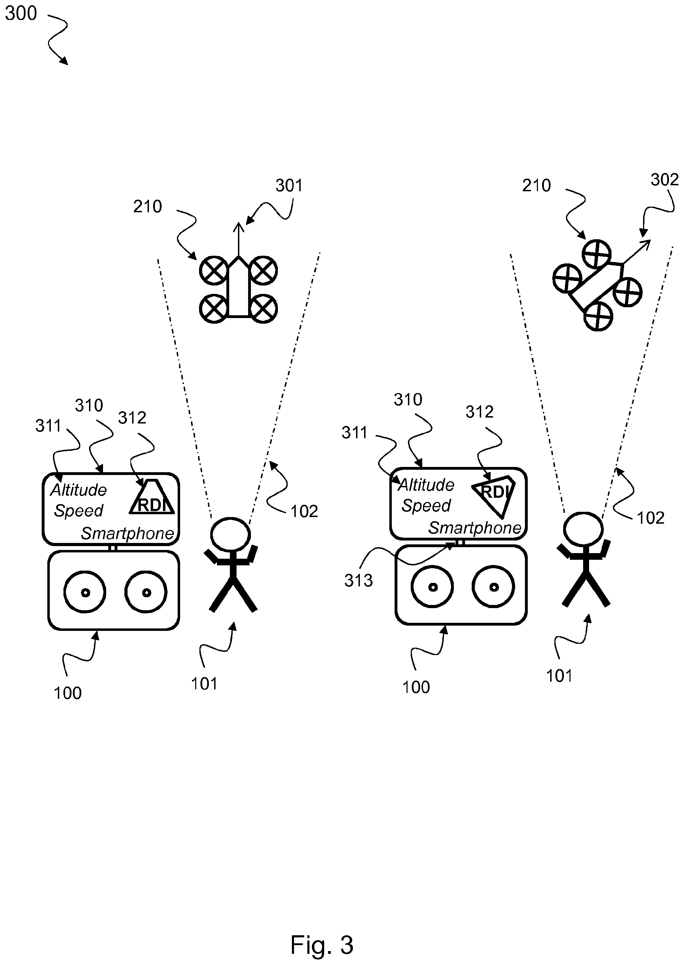

Fig. 3 shows a schematic diagram illustrating an example 300 for an RDI display on graphical interface indicating current heading of the UAV.

Most UAVs combine the controller 100 with a Smartphone 310 or similar device with a screen, in particular if the UAV 210 has a camera and transfers the pictures / the video stream online to the pilot 101. Usually the pilot 101 gets some indications on the screen like speed, altitude etc. 311 based on the UAV 210 related App to support the pilot's flight operation.

A "Relative Direction Indicator" (RDI) 312 is a very helpful tool on top of this information 311. The Relative Direction Indicator 312 is a graphical display on the screen to show the pilot 101 in which direction 301, 302 the UAV 210 is currently pointing in relation to the viewpoint of the pilot 101 (other than a pure compass). Most drones are equipped with a "return to base" function, mainly based on GPS coordinates. This data can be used for such RDI 312 as well. Since the UAV 210 knows its current position and the position of the controller 100 it is able to indicate the current direction in relation to the controller 100. However, this can be insufficient in some cases since it assumes that the pilot has not moved or turned but still looking in the same direction.

On the left side of Fig. 3, the scenario is shown where the RDI 312 on Smartphone 310 indicates a front direction 301 of the UAV 210, while on the right side of Fig. 3 the scenario is shown where the RDI 312 on Smartphone 310 indicates a front-to-right direction 302 of the UAV 210. The RDI symbol on the Smartphone 310 is aligned with the respective direction 301, 302 of the UAV 210.

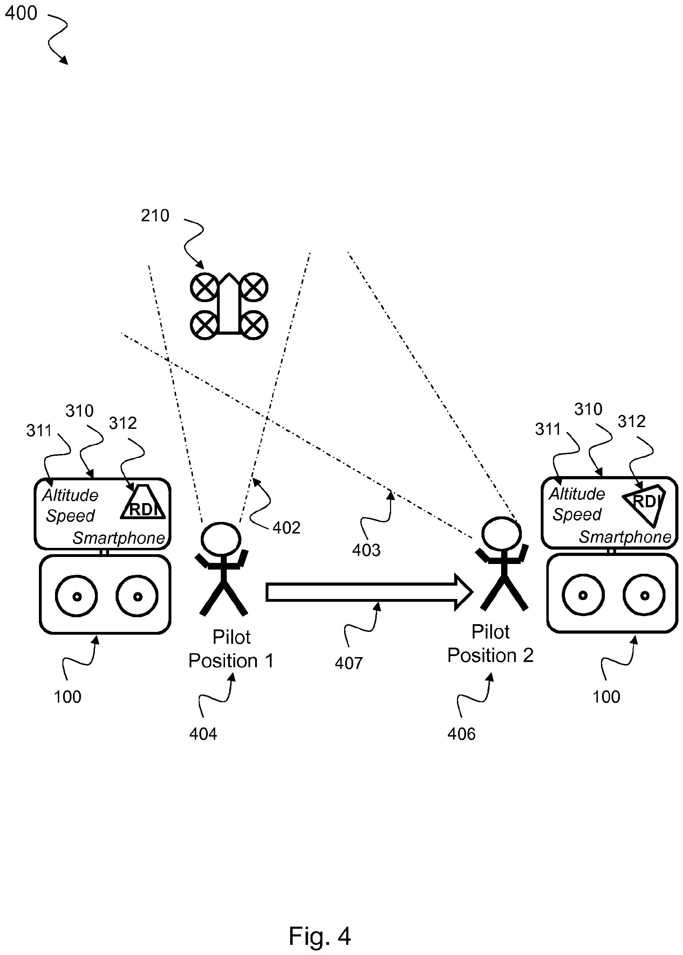

Fig. 4 shows a schematic diagram illustrating the scenario 400 of change in RDI display based on new position of pilot towards UAV.

To consider any movement of the pilot and to still indicate the heading of the UAV 210 correctly relative to the pilot, the controller 100 is able to indicate its position (e.g. by GPS coordinates) and the (heading of the controller 100 itself (e.g. by a compass).

This is important to capture the following situation: The UAV 210 stands still in the air in some distance from the pilot pointing still in the direction from the movement before. However, for any reason the pilot changes 407 its position, e.g. from first position 404 to second position 406 as shown in Fig. 4. If the pilot does not move in straight line towards the UAV 210 the relative position of the drone 210 changes. The RDI 312 would indicate this by comparing the new position 406 of the pilot to the drone 210. The RDI 312 can recognize the changed angle of the line of sight 402, 403 relation from the pilot to his UAV 210 and show this new information correctly on the display.

On the left side of Fig. 4, the scenario is shown where the RDI 312 on Smartphone 310 indicates a front direction of the UAV 210 versus the pilot which is in a first position 404 with front angle of line of sight 402, while on the right side of Fig. 4 the scenario is shown where the RDI 312 on Smartphone 310 indicates a front-to-right direction of the UAV 210 due to the movement 407 of the pilot from the first position 404 to the second position 406. The RDI symbol on the Smartphone 310 is still aligned with the direction of the UAV 210.

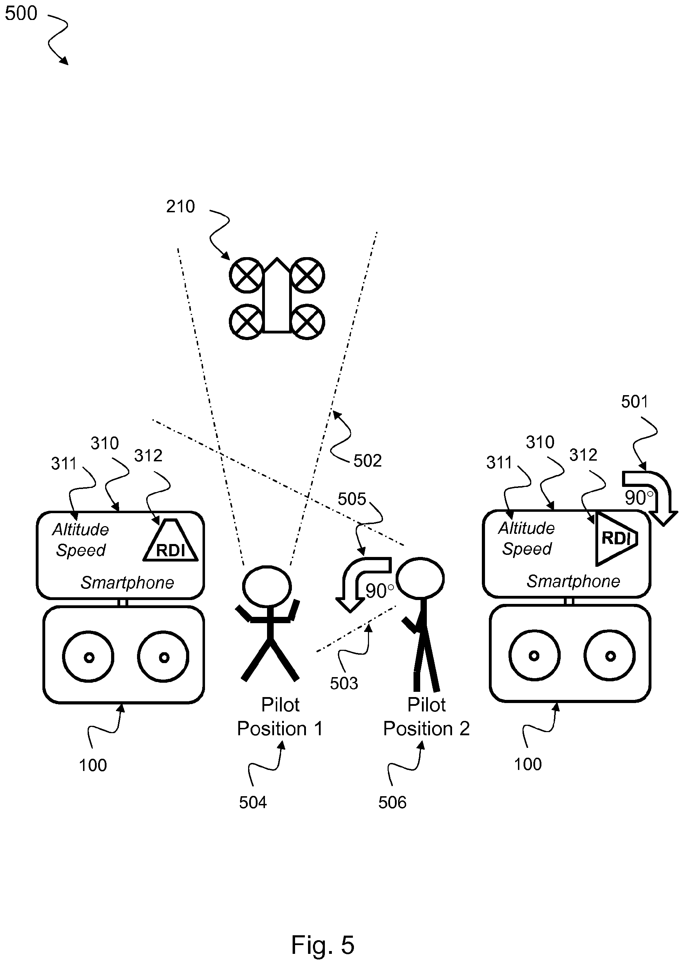

Fig. 5 shows a schematic diagram illustrating the scenario 500 of an example change in RDI display if pilot turns by 90° on his current position.

On the left side of Fig. 5, the scenario is shown where the RDI 312 on Smartphone 310 indicates a front direction of the UAV 210 versus the pilot which is in a first position 504 with front angle of line of sight 502, while on the right side of Fig. 5 the scenario is shown where the RDI 312 on Smartphone 310 indicates a right direction of the UAV 210 due to the movement of the pilot to the left by 90° 505, i.e. from the first position 504 to the second position 506. The RDI symbol on the Smartphone 310 performs a movement to the right by 90° 501 and hence is still aligned with the direction of the UAV 210.

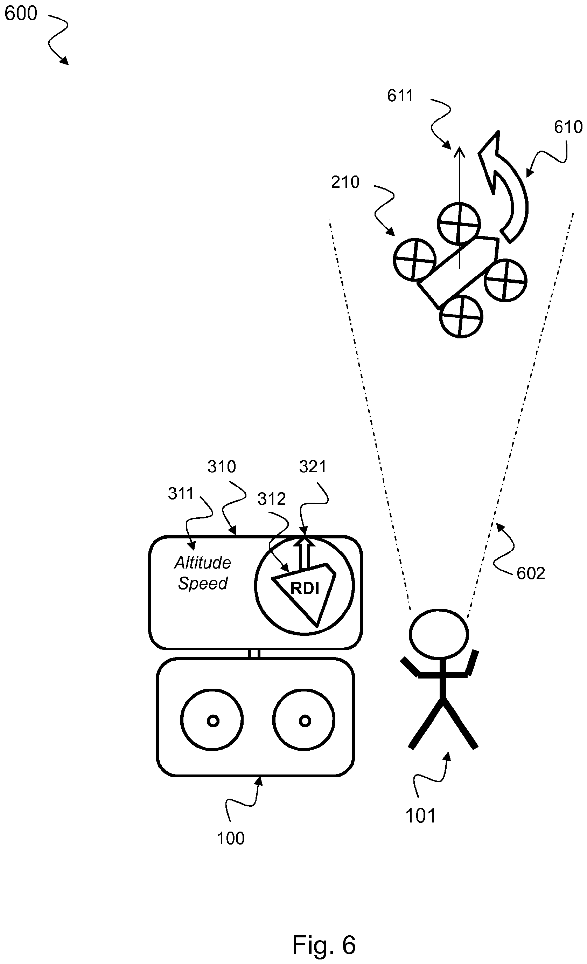

Fig. 6 shows a schematic diagram illustrating the scenario 600 with RDI-Align-function in an example for a command to the UAV to turn to 0° in relation to the pilot.

To keep it simple for the pilot 101 even in larger distance without really seeing the heading of the UAV 210 the RDI-Align Function can be enabled by a simple push to make the UAV 210 point 610 in the direction 321 the pilot 101 wants. This can be a simple 0° position, which means exactly tail of the UAV 210 to the pilot / pushing the button/control-stick 120 forward 121 means the UAV 210 flies away from the pilot 101; or if required let the UAV 210 precisely head to a certain direction from the pilots perspective (such as 90° or 225° if this is appropriate for the next movement). In Fig. 6 the direction 611 of the UAV 210 is aligned with the direction 321. As soon the pilot sets a command on the RDI 312 to turn the UAV in a 0° heading from the pilot's perspective 321 the UAV turns accordingly and will point to the new direction 611 as required by the pilot.

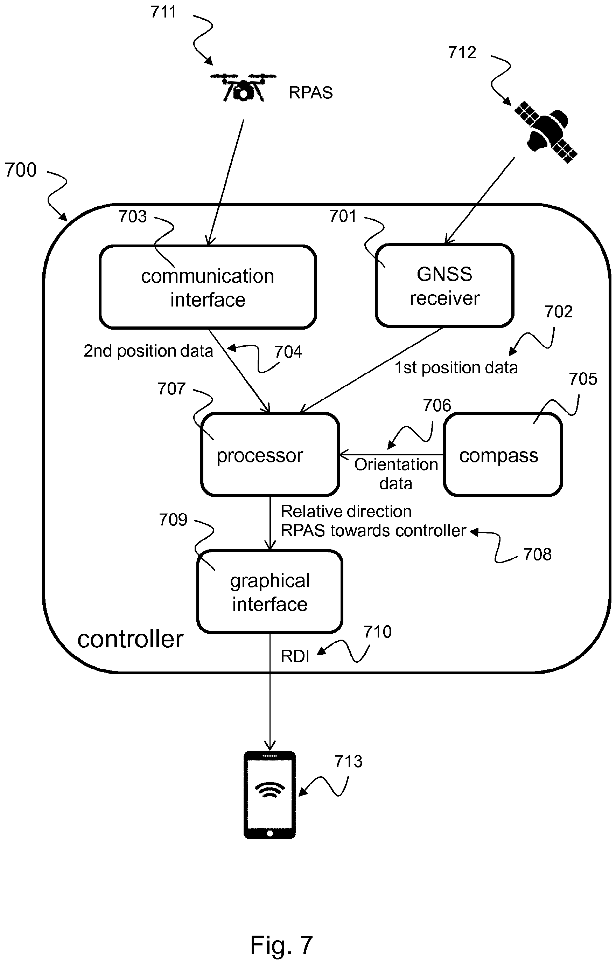

Fig. 7 shows a block diagram illustrating a controller 700 for a RPAS according to the disclosure. The controller 700 is wearable by a pilot of the RPAS 711. The controller 700 includes a global navigation satellite system (GNSS) receiver 701, a communication interface 703 with the RPAS 711, a compass 705, a processor 707; and a graphical interface 709.

The GNSS receiver 701 is configured to receive first position data 702 from at least one satellite 712. The first position data 702 indicates a position of the controller 700 and hence a position of the pilot when wearing the controller. The communication interface 703 with the RPAS 711 is configured to receive second position data 704 from the RPAS 711. The second position data 704 indicates a position of the RPAS 711. The compass 705 is configured to provide orientation data 706 indicating an orientation of the controller 700 towards a geographical reference direction, e.g. towards geographical north. The processor 707 is configured to determine a relative direction 708 of the RPAS 711 towards the controller 700 and hence a relative direction 708 of the RPAS 711 towards the pilot wearing the controller 700 based on the first position data 702, the second position data 704 and the orientation data 706. The graphical interface 709 is configured to provide a relative direction indicator (RDI) 710 providing a graphical indication of the relative direction 708 of the RPAS 711 towards the controller 700 and hence towards the pilot wearing the controller 700.

In one exemplary implementation of the controller 700, the graphical interface 709 includes a radio interface with a Smartphone 713 for transferring the RDI 710 onto a display of the Smartphone 713. The RDI 710 can then be represented in graphical form on the display, e.g. by an arrow or direction symbol as described above with respect to Figures 3 to 6.

The processor 707 may be configured to track the determined relative direction 708 of the RPAS 711 towards the controller 700 based on movements of the pilot wearing the controller 700. When the pilot moves, the processor 707 can continuously process the actual RDI 710.

The communication interface 703 may be configured to transmit an alignment command to the RPAS 711 which includes information on a specific direction for prompting the RPAS 711 to align the RPAS 711 with the specific direction. For example if the pilot wishes to align the RPAS with its current viewpoint the pilot can initiate an alignment command for aligning the RPAS with its current viewpoint.

The specific direction may be based on a predefined direction. For example, the controller may have a scale of different predefined directions and the pilot can align the RPAS with any of the predefined directions from the scale.

The specific direction may be based on an orientation of the controller 700, determined by the processor 707 based on the orientation data 706 provided by the compass 705. For example the pilot can align the RPAS based on his orientation as measured by the compass 705.

The specific direction may be based on an orientation of the controller 700, determined by the processor 707 based on the orientation data 706 provided by the compass 705 and the first position data 702 received by the GNSS receiver 701. For example the pilot can align the RPAS based on his orientation as measured by the compass 705 and based on his location as measured by the GNSS receiver 701.

The specific direction may be in line with a viewpoint of the pilot wearing the controller 700. When the pilot wears the controller 700 his viewpoint coincides with the viewpoint of the controller 700. Then the pilot can easily align the RPAS based on his viewpoint.

In one exemplary implementation of the controller 700, the controller includes a push button or a control stick configured to initiate the transmission of the alignment command to the RPAS 711 upon activation by the pilot.

In one exemplary implementation of the controller 700, the compass 705 includes an electronic compass integrated with the processor 707 on a chip.

The processor 707 may determine a movement vector of the RPAS 711 based on tracking the second position data 704. The processor 707 may further determine the relative direction of the RPAS 711 towards the controller 700, and hence towards the pilot, based on the movement vector of the RPAS 711. The processor 707 may determine a viewing vector of the pilot wearing the controller 700 based on the orientation data 706 and the first position data 702. The processor 707 may determine the relative direction 708 of the RPAS 711 towards the controller 700 based on the viewing vector of the pilot. The processor 707 may further determine the relative direction 708 of the RPAS 711 towards the controller 700 based on a subtraction of the viewing vector of the pilot from the movement vector of the RPAS 711.

The controller 700 and the smartphone 713 form a control system for a remotely piloted aircraft system 711. This control system includes the controller 700 as described above and the smartphone 713. The Smartphone 713 is coupled with the graphical interface 709 of the controller 700 via a radio interface, e.g. a radio interface 313 as shown in Fig. 3. The Smartphone 713 includes a display and a processor. The processor of the Smartphone 713 is configured to run an application program which is configured to fetch the RDI 710 from the graphical interface 709 and to display the RDI 710 on the display.

The application program may be configured to fetch a command of the pilot via the display to turn the UAV in a specific direction and to transmit the command via the controller to the RPAS. Hence, the pilot can easily align the RPAS with the specific direction, e.g. a 0° direction from the pilot's perspective, by making an input at the Smartphone display, for example by turning the RDI symbol on the Smartphone display into the desired direction.

The controller 700 represents an exemplary implementation of the controller 100 described above with respect to Figures 1 to 6. The RDI 710 represents an exemplary implementation of the RDI 312 on the Smartphone 310 as described above with respect to Figures 1 to 6. All scenarios described above with respect to Figures 1 to 6 can be implemented by the controller 700.

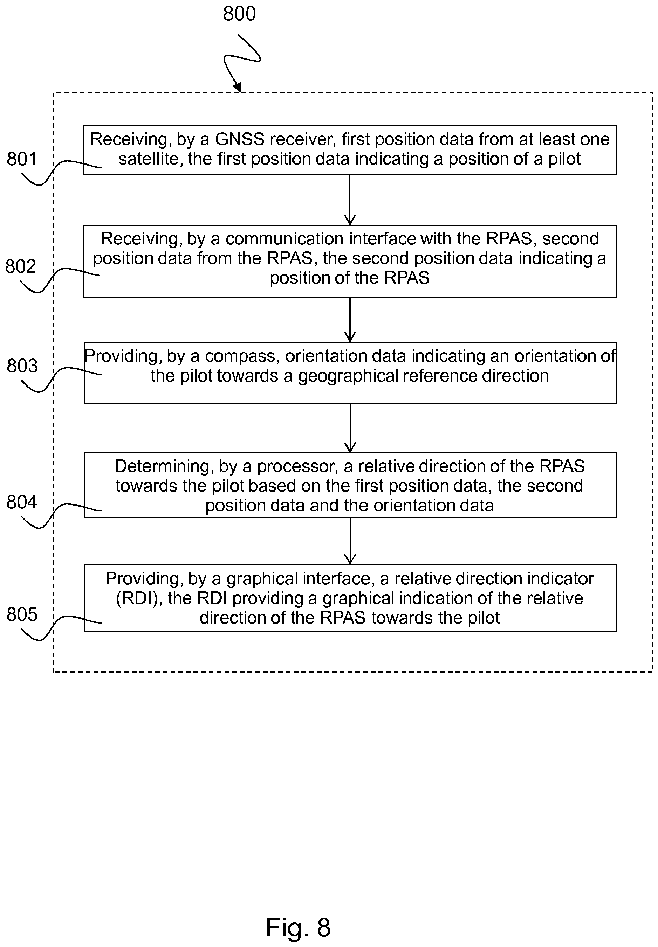

Fig. 8 shows a schematic diagram illustrating a method 800 for controlling an RPAS according to the disclosure.

The method 800 includes receiving 801, by a global navigation satellite system (GNSS) receiver 701, first position data 702 from at least one satellite 712, the first position data 702 indicating a position of a pilot, e.g. as described above with respect to Fig. 7.

The method 800 further includes receiving 802, by a communication interface 703 with the RPAS 711, second position data 704 from the RPAS 711, the second position data 704 indicating a position of the RPAS 711, e.g. as described above with respect to Fig. 7.

The method 800 further includes providing 803, by a compass 705, orientation data 706, the orientation data 706 indicating an orientation of the pilot towards a geographical reference direction, e.g. as described above with respect to Fig. 7.

The method 800 further includes determining 804, by a processor 707, a relative direction 708 of the RPAS 711 towards the pilot based on the first position data 702, the second position data 704 and the orientation data 706, e.g. as described above with respect to Fig. 7.

The method 800 further includes providing 805, by a graphical interface 709, a relative direction indicator (RDI) 710, the RDI providing a graphical indication of the relative direction 708 of the RPAS 711 towards the pilot.

The method 800 may be applied in a controller for an RPAS or UAV as described above with respect to Figures 1 to 7.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the method 400 as described above with respect to Fig. 8 and the techniques described above with respect to Figs. 1-8. Such a computer program product may include a readable non-transitory storage medium storing program code thereon for use by a computer. The program code may perform the methods and techniques as described above with respect to Figures 1 to 8.

## Claims

1. A controller (700) for a remotely piloted aircraft system (RPAS) (711), wherein the controller (700) is wearable by a pilot of the RPAS (711), the controller (700) comprising:
a global navigation satellite system (GNSS) receiver (701), configured to receive first position data (702) from at least one satellite (712), the first position data (702) indicating a position of the controller (700);
a communication interface (703) with the RPAS (711), configured to receive second position data (704) from the RPAS (711), the second position data (704) indicating a position of the RPAS (711);
a compass (705) configured to provide orientation data (706) indicating an orientation of the controller (700) towards a geographical reference direction;
a processor (707) configured to determine a relative direction (708) of the RPAS (711) towards the controller (700) based on the first position data (702), the second position data (704) and the orientation data (706),
wherein the processor (707) is configured to track the determined relative direction (708) of the RPAS (711) towards the controller (700) based on movements of the pilot wearing the controller (700); and
a graphical interface (709) configured to provide a relative direction indicator (RDI) (710) providing a graphical indication of the relative direction (708) of the RPAS (711) towards the controller (700),
**characterized in that**
the communication interface (703) is configured to transmit an alignment command to the RPAS (711), the alignment command comprising information on a specific direction for prompting the RPAS (711) to align the RPAS (711) with the specific direction,
wherein the specific direction is based on an orientation of the controller (700), determined by the processor (707) based on the orientation data (706) provided by the compass (705).

2. The controller (700) of claim 1,
wherein the graphical interface (709) comprises a radio interface with a Smartphone (713) for transferring the RDI (710) onto a display of the Smartphone (713).

3. The controller (700) of claim 1,
wherein the specific direction is based on a predefined direction.

4. The controller (700) of claim 1,
wherein the specific direction is based on an orientation of the controller (700), determined by the processor (707) based on the orientation data (706) provided by the compass (705) and the first position data (702) received by the GNSS receiver (701).

5. The controller (700) of one of claims 1, 3 or 4,
wherein the specific direction is in line with a viewpoint of the controller (700).

6. The controller (700) of one of claims 1 or 3 to 5, comprising:
a push button or control stick configured to initiate the transmission of the alignment command to the RPAS (711) upon activation by the pilot.

7. The controller (700) of one of the preceding claims,
wherein the compass (705) comprises an electronic compass integrated with the processor (707) on a chip.

8. The controller (700) of one of the preceding claims,
wherein the processor (707) is configured to determine a movement vector of the RPAS (711) based on tracking the second position data (704) and configured to determine the relative direction of the RPAS (711) towards the controller (700) based on the movement vector of the RPAS (711).

9. The controller (700) of claim 8,
wherein the processor (707) is configured to determine a viewing vector of the pilot wearing the controller (700) based on the orientation data (706) and the first position data (702) and configured to determine the relative direction (708) of the RPAS (711) towards the controller (700) based on the viewing vector of the pilot.

10. The controller (700) of claim 9,
wherein the processor (707) is configured to determine the relative direction (708) of the RPAS (711) towards the controller (700) based on a subtraction of the viewing vector of the pilot from the movement vector of the RPAS (711).

11. A control system (100, 310) for a remotely piloted aircraft system (RPAS) (210, 711), the control system comprising:
a controller (700, 100) according to one of the preceding claims; and
a Smartphone (310, 713) coupled with the graphical interface (709) of the controller (700, 100) via a radio interface (313), the Smartphone (310, 713) comprising:
a display; and
a processor configured to run an application program which is configured to fetch the RDI (710, 312) from the graphical interface (709) and to display the RDI (710, 312) on the display.

12. The control system (100, 310) of claim 11,
wherein the application program is configured to fetch a command of the pilot via the display to turn the UAV in a specific direction and to transmit the command via the controller (700, 100) to the RPAS (210, 711).

13. A method (800) for controlling a remotely piloted aircraft system (RPAS) (711, 210), the method (800) comprising:
receiving (801), by a global navigation satellite system (GNSS) receiver (701), first position data (702) from at least one satellite (712), the first position data (702) indicating a position of a pilot;
receiving (802), by a communication interface (703) with the RPAS (711), second position data (704) from the RPAS (711), the second position data (704) indicating a position of the RPAS (711);
providing (803), by a compass (705), orientation data (706), the orientation data (706) indicating an orientation of the pilot towards a geographical reference direction;
determining (804), by a processor (707), a relative direction (708) of the RPAS (711) towards the pilot based on the first position data (702), the second position data (704) and the orientation data (706);
tracking the determined relative direction (708) of the RPAS (711) towards the pilot based on movements of the pilot wearing the controller (700); and
providing (805), by a graphical interface (709), a relative direction indicator (RDI) (710), the RDI providing a graphical indication of the relative direction (708) of the RPAS (711) towards the pilot; and
**characterized in that** the method further comprising:
transmitting an alignment command to the RPAS (711), the alignment command comprising information on a specific direction for prompting the RPAS (711) to align the RPAS (711) with the specific direction,
wherein the specific direction is based on the orientation data (706) provided by the compass (705).

## Patentansprüche

1. Steuerung (700) für ein ferngeführtes Luftfahrzeugsystem (RPAS) (711), wobei die Steuerung (700) von einem Piloten des RPAS (711) tragbar ist, wobei die Steuerung (700) Folgendes umfasst:
einen globalen Navigationssatellitensystem(GNSS)-Empfänger (701), der dazu ausgelegt ist, erste Positionsdaten (702) von mindestens einem Satelliten (712) zu empfangen, wobei die ersten Positionsdaten (702) eine Position der Steuerung (700) anzeigen;
eine Kommunikationsschnittstelle (703) mit dem RPAS (711), die dazu ausgelegt ist, zweite Positionsdaten (704) vom RPAS (711) zu empfangen, wobei die zweiten Positionsdaten (704) eine Position des RPAS (711) anzeigen;
einen Kompass (705), der dazu ausgelegt ist, Orientierungsdaten (706) bereitzustellen, die eine Orientierung der Steuerung (700) zu einer geografischen Referenzrichtung anzeigen;
einen Prozessor (707), der dazu ausgelegt ist, auf Basis der ersten Positionsdaten (702), der zweiten Positionsdaten (704) und der Orientierungsdaten (706) eine relative Richtung (708) des RPAS (711) zur Steuerung (700) zu bestimmen,
wobei der Prozessor (707) dazu ausgelegt ist, die bestimmte relative Richtung (708) des RPAS (711) zur Steuerung (700) auf Basis von Bewegungen des Piloten, der die Steuerung (700) trägt, zu verfolgen; und
eine grafische Schnittstelle (709), die dazu ausgelegt ist, eine relative Richtungsanzeige (RDI) (710) bereitzustellen, die eine grafische Anzeige der relativen Richtung (708) des RPAS (711) zur Steuerung (700) bereitstellt,
**dadurch gekennzeichnet, dass** die Kommunikationsschnittstelle (703) dazu ausgelegt ist, einen Ausrichtungsbefehl zum RPAS (711) zu übertragen, wobei der Ausrichtungsbefehl Informationen zu einer spezifischen Richtung zum Auffordern des RPAS (711), das RPAS (711) auf die spezifische Richtung auszurichten, umfasst,
wobei die spezifische Richtung auf einer Orientierung der Steuerung (700), die vom Prozessor (707) auf Basis von Orientierungsdaten (706) bestimmt wird, die vom Kompass (705) bereitgestellt werden, basiert.

2. Steuerung (700) nach Anspruch 1,
wobei die grafische Schnittstelle (709) eine Funkschnittstelle mit einem Smartphone (713) zum Übermitteln der RDI (710) zu einem Display des Smartphones (713) umfasst.

3. Steuerung (700) nach Anspruch 1,
wobei die spezifische Richtung auf einer vordefinierten Richtung basiert.

4. Steuerung (700) nach Anspruch 1,
wobei die spezifische Richtung auf einer Orientierung der Steuerung (700), die vom Prozessor (707) auf Basis von Orientierungsdaten (706) bestimmt wird, die vom Kompass (705) bereitgestellt werden, und den ersten Positionsdaten (702), die vom GNSS-Empfänger (701) empfangen werden, basiert.

5. Steuerung (700) nach einem der Ansprüche 1, 3 oder 4,
wobei sich die spezifische Richtung mit einem Standpunkt der Steuerung (700) deckt.

6. Steuerung (700) nach einem der Ansprüche 1 oder 3 bis 5, die Folgendes umfasst:
einen Druckknopf oder einen Steuerknüppel, der dazu ausgelegt ist, die Übertragung des Ausrichtungsbefehls zum RPAS (711) nach Aktivierung durch den Piloten zu initiieren.

7. Steuerung (700) nach einem der vorhergehenden Ansprüche,
wobei der Kompass (705) einen elektronischen Kompass umfasst, der auf einem Chip in den Prozessor (707) integriert ist.

8. Steuerung (700) nach einem der vorhergehenden Ansprüche,
wobei der Prozessor (707) dazu ausgelegt ist, auf Basis des Verfolgens der zweiten Positionsdaten (704) einen Bewegungsvektor des RPAS (711) zu bestimmen, und dazu ausgelegt, auf Basis des Bewegungsvektors des RPAS (711) die relative Richtung des RPAS (711) zur Steuerung (700) zu bestimmen.

9. Steuerung (700) nach Anspruch 8,
wobei der Prozessor (707) dazu ausgelegt ist, auf Basis der Orientierungsdaten (706) und der ersten Positionsdaten (702) einen Sichtvektor des Piloten, der die Steuerung (700) trägt, zu bestimmen, und dazu ausgelegt, auf Basis des Sichtvektors des Piloten die relative Richtung (708) des RPAS (711) zur Steuerung (700) zu bestimmen.

10. Steuerung (700) nach Anspruch 9,
wobei der Prozessor (707) dazu ausgelegt ist, auf Basis einer Subtraktion des Sichtvektors des Piloten vom Bewegungsvektor des RPAS (711) die relative Richtung (708) des RPAS (711) zur Steuerung (700) zu bestimmen.

11. Steuersystem (100, 310) für ein ferngeführtes Luftfahrzeugsystem (RPAS) (210, 711), wobei das Steuersystem Folgendes umfasst:
eine Steuerung (700, 100) nach einem der vorhergehenden Ansprüche; und
ein Smartphone (310, 713), das via die Funkschnittstelle (313) an die grafische Schnittstelle (709) der Steuerung (700, 100) gekoppelt ist, wobei das Smartphone (310, 713) Folgendes umfasst:
ein Display; und
einen Prozessor, der dazu ausgelegt ist, ein Anwendungsprogramm auszuführen, das dazu ausgelegt ist, die RDI (710, 312) von der grafischen Schnittstelle (709) abzurufen und die RDI (710, 312) auf dem Display anzuzeigen.

12. Steuersystem (100, 310) nach Anspruch 11,
wobei das Anwendungsprogramm dazu ausgelegt ist, via das Display einen Befehl des Piloten abzurufen, um das UAV in eine spezifische Richtung zu drehen, und den Befehl via die Steuerung (700, 100) zum RPAS (210, 711) zu übertragen.

13. Verfahren (800) zum Steuern eines ferngeführten Luftfahrzeugsystem (RPAS) (711, 210), wobei das Verfahren (800) Folgendes umfasst:
Empfangen (801) von ersten Positionsdaten (702) von mindestens einem Satelliten (712) durch einen globalen Navigationssatellitensystem(GNSS)-Empfänger (701), wobei die ersten Positionsdaten (702) eine Position eines Piloten anzeigen;
Empfangen (802) von zweiten Positionsdaten (704) vom RPAS (711) durch eine Kommunikationsschnittstelle (703) mit dem RPAS (711), wobei die zweiten Positionsdaten (704) eine Position des RPAS (711) anzeigen;
Bereitstellen (803) von Orientierungsdaten (706) durch einen Kompass (705), wobei die Orientierungsdaten (706) eine Orientierung des Piloten zu einer geografischen Referenzrichtung anzeigen;
Bestimmen (804) einer relativen Richtung (708) des RPAS (711) zum Piloten auf Basis der ersten Positionsdaten (702), der zweiten Positionsdaten (704) und der Orientierungsdaten (706) durch einen Prozessor (707);
Verfolgen der bestimmten relativen Richtung (708) des RPAS (711) zum Piloten auf Basis von Bewegungen des Piloten, der die Steuerung (700) trägt; und
Bereitstellen (805) einer relativen Richtungsanzeige (RDI) (710) durch eine grafische Schnittstelle (709), wobei die RDI eine grafische Anzeige der relativen Richtung (708) des RPAS (711) zum Piloten bereitstellt; und
**dadurch gekennzeichnet, dass** das Verfahren ferner Folgendes umfasst:
Übertragen eines Ausrichtungsbefehls zum RPAS (711), wobei der Ausrichtungsbefehl Informationen zu einer spezifischen Richtung zum Auffordern des RPAS (711), das RPAS (711) auf die spezifische Richtung auszurichten, umfasst,
wobei die spezifische Richtung auf den Orientierungsdaten (706), die vom Kompass (705) bereitgestellt werden, basiert.

## Revendications

1. Organe de commande (700) pour un système d'aéronef piloté à distance (RPAS) (711), dans lequel l'organe de commande (700) peut être porté par un pilote du RPAS (711), l'organe de commande (700) comprenant :
un récepteur (701) de système mondial de navigation par satellite (GNSS), configuré pour recevoir des premières données de position (702) provenant d'au moins un satellite (712), les premières données de position (702) indiquant une position de l'organe de commande (700) ;
une interface de communication (703) avec le RPAS (711), configurée pour recevoir des secondes données de position (704) du RPAS (711), les secondes données de position (704) indiquant une position du RPAS (711) ;
une boussole (705) configurée pour fournir des données d'orientation (706) indiquant une orientation de l'organe de commande (700) vers une direction géographique de référence ;
un processeur (707) configuré pour déterminer une direction relative (708) du RPAS (711) vers l'organe de commande (700) sur la base des premières données de position (702), des secondes données de position (704) et des données d'orientation (706),
où le processeur (707) est configuré pour suivre la direction relative déterminée (708) du RPAS (711) vers l'organe de commande (700) sur la base des mouvements du pilote portant l'organe de commande (700) ; et
une interface graphique (709) configurée pour fournir un indicateur de direction relative (RDI) (710) fournissant une indication graphique de la direction relative (708) du RPAS (711) vers l'organe de commande (700),
**caractérisé en ce que** l'interface de communication (703) est configurée pour transmettre une commande d'alignement au RPAS (711), la commande d'alignement comprenant des informations sur une direction spécifique pour inviter le RPAS (711) à aligner le RPAS (711) avec la direction spécifique,
où la direction spécifique est basée sur une orientation de l'organe de commande (700), déterminée par le processeur (707) sur la base des données d'orientation (706) fournies par la boussole (705).

2. Organe de commande (700) selon la revendication 1, dans lequel l'interface graphique (709) comprend une interface radio avec un smartphone (713) pour transférer l'indicateur RDI (710) sur un écran du smartphone (713).

3. Organe de commande (700) selon la revendication 1, dans lequel la direction spécifique est basée sur une direction prédéfinie.

4. Organe de commande (700) selon la revendication 1, dans lequel la direction spécifique est basée sur une orientation de l'organe de commande (700), déterminée par le processeur (707) sur la base des données d'orientation (706) fournies par la boussole (705) et des premières données de position (702) reçues par le récepteur GNSS (701).

5. Organe de commande (700) selon l'une des revendications 1, 3 ou 4,
dans lequel la direction spécifique est alignée avec un point de vue de l'organe de commande (700).

6. Organe de commande (700) selon l'une des revendications 1 ou 3 à 5, comprenant :
un bouton-poussoir ou une manette de commande configuré pour déclencher la transmission de la commande d'alignement au RPAS (711) lors de l'activation par le pilote.

7. Organe de commande (700) selon l'une des revendications précédentes,
dans lequel la boussole (705) comprend une boussole électronique intégrée au processeur (707) sur une puce.

8. Organe de commande (700) selon l'une des revendications précédentes,
dans lequel le processeur (707) est configuré pour déterminer un vecteur de mouvement du RPAS (711) sur la base du suivi des secondes données de position (704), et est configuré pour déterminer la direction relative du RPAS (711) vers l'organe de commande (700) sur la base du vecteur de mouvement du RPAS (711).

9. Organe de commande (700) selon la revendication 8, dans lequel le processeur (707) est configuré pour déterminer un vecteur de visualisation du pilote portant l'organe de commande (700) sur la base des données d'orientation (706) et des premières données de position (702), et est configuré pour déterminer la direction relative (708) du RPAS (711) vers l'organe de commande (700) sur la base du vecteur de visualisation du pilote.

10. Organe de commande (700) selon la revendication 9, dans lequel le processeur (707) est configuré pour déterminer la direction relative (708) du RPAS (711) vers l'organe de commande (700) sur la base d'une soustraction du vecteur de visualisation du pilote du vecteur de mouvement du RPAS (711).

11. Système de commande (100, 310) pour un système d'aéronef piloté à distance (RPAS) (210, 711), le système de commande comprenant :
un organe de commande (700, 100) selon l'une des revendications précédentes ; et
un smartphone (310, 713) couplé à l'interface graphique (709) de l'organe de commande (700, 100) par l'intermédiaire d'une interface radio (313), le smartphone (310, 713) comprenant :
un affichage ; et
un processeur configuré pour exécuter un programme d'application qui est configuré pour récupérer l'indicateur RDI (710, 312) depuis l'interface graphique (709) et pour afficher l'indicateur RDI (710, 312) sur l'affichage.

12. Système de commande (100, 310) selon la revendication 11,
dans lequel le programme d'application est configuré pour récupérer une commande du pilote par l'intermédiaire de l'affichage pour faire tourner le drone dans une direction spécifique et pour transmettre la commande par l'intermédiaire de l'organe de commande (700, 100) au RPAS (210, 711).

13. Procédé (800) pour commander un système d'aéronef piloté à distance (RPAS) (711, 210), le procédé (800) comprenant les étapes suivantes :
recevoir (801), par un récepteur (701) de système mondial de navigation par satellite (GNSS), des premières données de position (702) provenant d'au moins un satellite (712), les premières données de position (702) indiquant une position d'un pilote ;
recevoir (802), par une interface de communication (703) avec le RPAS (711), des secondes données de position (704) provenant du RPAS (711), les secondes données de position (704) indiquant une position du RPAS (711) ;
fournir (803), par une boussole (705), des données d'orientation (706), les données d'orientation (706) indiquant une orientation du pilote vers une direction géographique de référence ;
déterminer (804), par un processeur (707), une direction relative (708) du RPAS (711) vers le pilote sur la base des premières données de position (702), des secondes données de position (704) et des données d'orientation (706) ;
suivre la direction relative déterminée (708) du RPAS (711) vers le pilote sur la base des mouvements du pilote portant l'organe de commande (700) ; et
fournir (805), par une interface graphique (709), un indicateur de direction relative (RDI) (710), l'indicateur RDI fournissant une indication graphique de la direction relative (708) du RPAS (711) vers le pilote ; et
**caractérisé en ce que** le procédé comprend en outre :
de transmettre une commande d'alignement au RPAS (711), la commande d'alignement comprenant des informations sur une direction spécifique pour inviter le RPAS (711) à aligner le RPAS (711) avec la direction spécifique,
où la direction spécifique est basée sur les données d'orientation (706) fournies par la boussole (705).
